(19) Europäisches Patentamt / European Patent Office / Office européen des brevets

(11) **EP 2 843 390 B1**

(12) **FASCICULE DE BREVET EUROPEEN**

(45) Date de publication et mention
de la délivrance du brevet:
**22.02.2017 Bulletin 2017/08**

(51) Int Cl.:
**G01N 7/14** (2006.01)          **H01J 49/26** (2006.01)

(21) Numéro de dépôt: **14180294.2**

(22) Date de dépôt: **08.08.2014**

(54) **Procédé de suivi du taux de dégazage par la mesure de pressions partielles mesurées par spectrométrie de masse**

Verfahren zur Nachverfolgung der Ausgasungsrate durch Messung der Partialdrücke mit einem Massenspektrometer

Method for following degassing rate by measuring partial pressures measured by mass spectrometry

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.08.2013 FR 1302014**

(43) Date de publication de la demande:
**04.03.2015 Bulletin 2015/10**

(73) Titulaire: **THALES**
**92400 Courbevoie (FR)**

(72) Inventeur: **Bettacchioli, Alain Roger Dante**
**06150 Cannes La Bocca (FR)**

(74) Mandataire: **Collet, Alain**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A1-2009/012919     CN-A- 103 267 705**
**US-B1- 8 268 241**

• **ELSEY ET AL:** "Outgassing of vacuum materials-II", VACUUM, PERGAMON PRESS, GB, vol. 25, no. 8, 1 août 1975 (1975-08-01), pages 347-361, XP024689269, ISSN: 0042-207X, DOI: 10.1016/0042-207X(75)91653-X [extrait le 1975-08-01]
• **N SCHINDLER ET AL:** "Measurements of partial outgassing rates", VACUUM, vol. 47, no. 4, 1 avril 1996 (1996-04-01), pages 351-355, XP055117677, ISSN: 0042-207X, DOI: 10.1016/0042-207X(95)00250-2
• **SCHINDLER N ET AL:** "Some investigations on the effective short time outgassing depth of metals", JOURNAL OF VACUUM SCIENCE AND TECHNOLOGY: PART A, AVS /AIP, MELVILLE, NY., US, vol. 16, no. 6, 1 novembre 1998 (1998-11-01), pages 3569-3577, XP012004326, ISSN: 0734-2101, DOI: 10.1116/1.581000
• **D. EDWARDS:** "Upper bound to the pressure in an elementary vacuum system", JOURNAL OF VACUUM SCIENCE AND TECHNOLOGY, vol. 14, no. 1, 1 janvier 1977 (1977-01-01), page 606, XP055117686, ISSN: 0022-5355, DOI: 10.1116/1.569160
• **P. Michallon ET AL:** "Out-gassing tool at CEA-LETI", , 7 novembre 2005 (2005-11-07), XP055117682, Extrait de l'Internet: URL:http://www.sematech.org/meetings/archives/litho/euvl/7470/posters.htm [extrait le 2014-05-13]

## Description

La présente invention concerne le domaine des moyens d'essais et de mise au point de composants par dégazage de composés volatils libérés par un composant ou système placé dans une enceinte sous vide, et plus particulièrement elle porte sur un procédé de suivi du taux de dégazage par la mesure de pressions partielles mesurées par un spectromètre de masse relié à l'enceinte sous vide thermique.

WO2009012919 décrit un procédé de suivi d'une opération de dégazage d'un composant placé dans une enceinte sous vide qui comprend des étapes consistant à :

- mesurer des pressions partielles d'un ensemble M de masses atomiques de référence, au moyen d'un spectromètre de masse relié à l'enceinte sous vide,
- déterminer un taux de dégazage $\eta$ au moins en fonction des pressions partielles Pi mesurées pour l'ensemble M de masses atomiques de référence.

US8268241 décrit également un procédé de suivi d'une opération de dégazage d'un composant placé dans une enceinte sous vide.

Il existe dans diverses industries la nécessité d'opérer après la fabrication ou l'assemblage d'un composant, une étape de dégazage sous vide qui provoque la désorption d'espèces chimiques volatiles piégées par ce composant. Dans le domaine du spatial, cette étape de dégazage revêt une importance particulière notamment car la libération des espèces chimiques dans l'espace extra-atmosphérique constitue un risque élevé de pollution et d'endommagement des constituants de l'engin spatial. Ainsi, dans le but d'assurer l'intégrité des équipements, tels que par exemple des systèmes optiques ou de télécommunications, il est nécessaire de réaliser le dégazage des composants ou sous-systèmes d'un satellite, tels qu'une centrale inertielle, un groupe moteur de déploiement de générateurs solaires, ou encore la plateforme satellite entièrement assemblée. Plusieurs étapes de dégazage sont généralement prévues tout au long du processus de fabrication du satellite. Par exemple, un matériau composite sera dégazé une première fois après sa préparation, une seconde fois après son intégration dans un sous-système fonctionnel, puis une nouvelle fois après l'assemblage final du satellite.

Pour la réalisation de ces opérations de dégazage sont mises en oeuvre diverses chambres de vide, dont la capacité peut varier du mètre cube jusqu'à plus de 500 m³ typiquement, et capables d'être pilotés à des températures comprises typiquement entre la température ambiante et 150°C, pour des pressions de vide comprises typiquement entre $10^{-5}$ et $10^{-7}$ hPa. Sachant qu'une opération de dégazage se déroule généralement sur un à trois jours, on comprend aisément le coût industriel élevé que représente une telle opération.

Selon les matériaux constituants le composant ou le sous-système considéré, divers composés chimiques volatils sont susceptibles d'être libérés. Par exemple dans le domaine spatial, lors du dégazage de produits isolants connus sous l'acronyme anglo-saxon de MLI pour Multi Layer Insulation, ou de groupes motorisés pour le déploiement de générateurs solaires connus l'acronyme anglo-saxon de SADM pour Solar Array Drive Mechanism, il peut être libéré divers solvants, de l'eau, et/ou des produits siliconées lors d'un dégazage sous vide thermique.

Les procédés de dégazage actuellement mis en oeuvre sont simples. Ils consistent généralement à maintenir le composant dans la chambre à vide à des conditions de vide, de température et de durée déterminées de manière empirique. Ainsi sont définis divers protocoles appliqués en fonction du composant ou du sous-système considéré. A titre d'exemple, des protocoles mis en oeuvre sont typiquement :

- 24 heures à 120°C,
- 48 heures à 100°C, ou
- 72 heures à 80°C,

pour un niveau de vide final de l'ordre de $10^{-6}$ hPa.

Ces valeurs sont toutefois purement expérimentales, et parfois fondées sur des études anciennes. Ces opérations de dégazage ne permettent pas de mesurer l'efficacité du dégazage au cours de l'essai. Il est donc possible dans ces conditions que l'essai ait été poursuivi alors que la limite de dégazage avait déjà été atteinte depuis plusieurs heures, ou inversement, qu'à l'issue de l'essai, le dégazage ne soit pas effectivement achevé.

Une technique connue de mesure de l'efficacité d'une opération de dégazage sous vide met en oeuvre des instruments de type balance à quartz. La balance à quartz permet en effet une mesure quantitative satisfaisante lorsque la masse du dépôt recueilli reste dans des faibles proportions. Ces instruments ont été mis en oeuvre avec succès lorsque les équipements à dégazer sont des systèmes optiques ou des systèmes dont la teneur en composés volatils est faible. En revanche, lorsque les équipements à dégazer libèrent des composés volatils en plus grande quantité ou plus polluants, ces instruments présentent des limites. En particulier, ils se saturent rapidement et nécessitent alors des opérations de régénérations régulières pour les dégazer. Cette nécessité de régénérations régulières pour obtenir de nouveau une mesure de la masse déposée rend ces instruments mal adaptés pour la mesure de l'efficacité du dégazage des composants mis en oeuvre dans le domaine spatial. Une autre difficulté de cette technique concerne la précision de la mesure lorsque la température de l'enceinte de dégazage est très éloignée de la température de la coupelle servant à recueillir le dépôt. Pour permettre la condensation des composés volatils à analyser, la balance à quartz joue alors un rôle de piège froid trop efficace, elle se sature alors très rapidement impliquant de nombreuses régénérations. Il en résulte des mesures peu précises et inadaptées à un suivi efficace d'un taux de dégazage au cours d'un essai.

L'enjeu est d'assurer une opération de dégazage complète et rapide, permettant de réduire la durée et donc le coût de l'opération, et de sécuriser les étapes ultérieures de conception ou d'utilisation. Les techniques actuellement mises en oeuvre sont inadaptées à ce besoin. Il est aujourd'hui désirable de disposer d'un moyen permettant le suivi en temps réel, au cours de l'opération de dégazage, du taux de dégazage d'un composant placé sous vide thermique.

A cet effet, l'invention a pour objet un procédé de suivi d'une opération de dégazage d'un composant placé dans une enceinte sous vide, qui comprend des étapes consistant à :

- mesurer périodiquement des pressions partielles $P_i$ d'un ensemble M de masses atomiques de référence, au moyen d'un spectromètre de masse relié à l'enceinte sous vide,
- déterminer périodiquement un taux de dégazage $\eta$, au moins en fonction des pressions partielles $P_i$ mesurées pour l'ensemble M de masses atomiques de référence,
- calculer et afficher périodiquement une pente d'évolution du taux de dégazage $\eta$, où le-dit taux de dégazage $\eta$ est déterminé, par calcul au moyen d'une relation du type :

$$\eta \;=\; \frac{\sum\limits_{i \in M} \alpha_i \, P_i}{\sum\limits^{N} \alpha_i \, P_i}$$

dans laquelle M désigne l'ensemble des masses atomiques de référence, $P_i$ désignent les pressions partielles des masses atomiques mesurées par le spectromètre de masse, les coefficients $\alpha_i$ désignent des coefficients de pondération prédéterminés associés à chaque pression partielle $P_i$, et N désigne une masse atomique maximale dont la pression partielle Pi peut être mesurée par le spectromètre de masse.

Avantageusement, l'ensemble M de masses atomiques de référence comprend au moins les masses atomiques suivantes : 16, 18, 30, 32 et 44.

Avantageusement, le procédé comprend une étape préalable de sélection dans une liste prédéterminée, de l'ensemble M de masses atomiques de référence mis en oeuvre pour le calcul du taux de dégazage.

Avantageusement, le procédé comprend également une étape de sélection dans une liste prédéterminée, d'un ensemble de coefficients de pondération $\alpha_i$ associés aux pressions partielles $P_i$ de l'ensemble M de masses atomiques de référence considéré.

Avantageusement, les coefficients de pondération $\alpha_i$ mis en oeuvre dans le calcul du taux de dégazage sont tous égaux à 1.

Avantageusement, le procédé comprend une étape consistant à déterminer périodiquement un critère d'arrêt de l'opération de dégazage, au moins en fonction de la pente d'évolution du taux de dégazage $\eta$. Le critère d'arrêt peut être déterminé au moins par comparaison de la pente d'évolution du taux de dégazage $\eta$ avec une valeur prédéterminée. Il peut aussi être déterminé au moins par comparaison, avec une valeur prédéterminée, du rapport entre la pente d'évolution du taux de dégazage $\eta$ déterminée périodiquement et une pente d'évolution du taux de dégazage $\eta_o$ déterminée initialement. Il peut enfin être déterminé en fonction de la pente d'évolution du taux de dégazage $\eta$ et du rapport entre la pente d'évolution du taux de dégazage $\eta$ déterminée périodiquement et une pente d'évolution du taux de dégazage $\eta_o$ déterminée initialement.

Avantageusement, le procédé comprend une étape consistant à modifier des conditions de température et de pression régnant dans l'enceinte sous vide en fonction du taux de dégazage $\eta$ ou de la pente d'évolution du taux de dégazage.

Avantageusement, le procédé comprend une étape d'alerte d'un opérateur de l'enceinte sous vide en fonction du taux de dégazage $\eta$ ou de la pente d'évolution du taux de dégazage.

L'invention porte également sur un spectromètre de masse comprenant un module de pilotage configurée pour la mise en oeuvre du procédé ayant les caractéristiques précédemment décrites.

L'invention porte enfin sur un dispositif de dégazage comprenant une enceinte sous vide destinée au dégazage d'un composant, et un spectromètre de masse ayant les caractéristiques précédemment décrites.

L'invention sera mieux comprise et d'autres avantages apparaîtront à la lecture de la description détaillée des modes de réalisation donnés à titre d'exemple sur les figures suivantes.

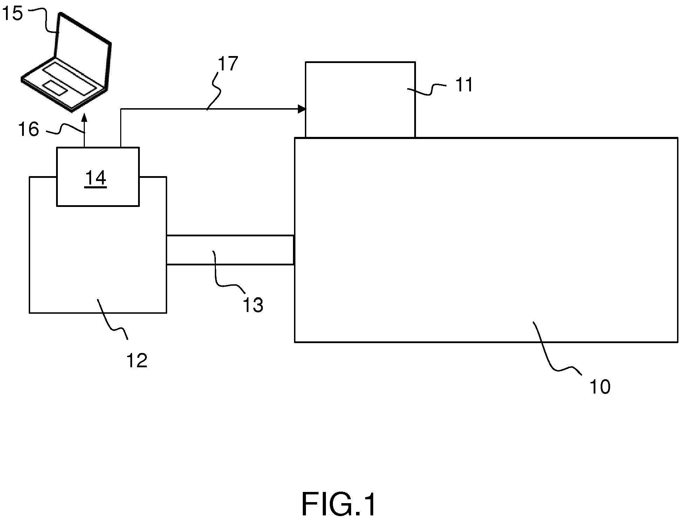

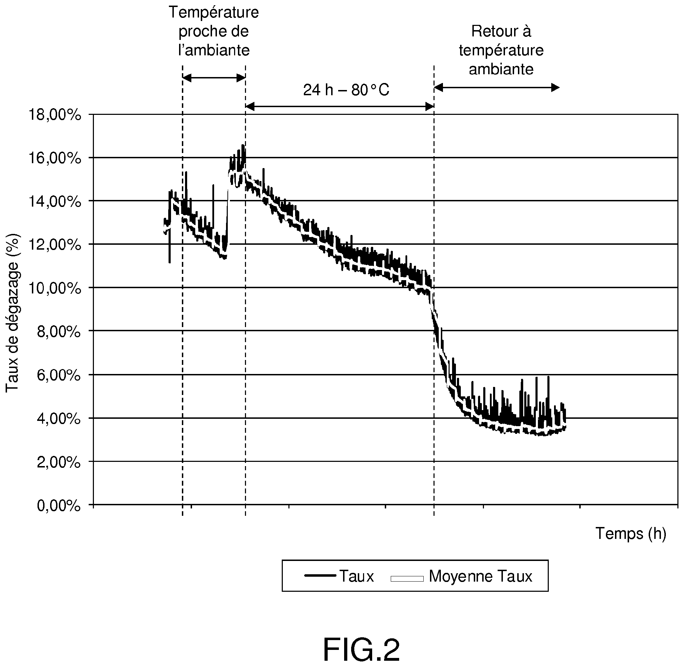

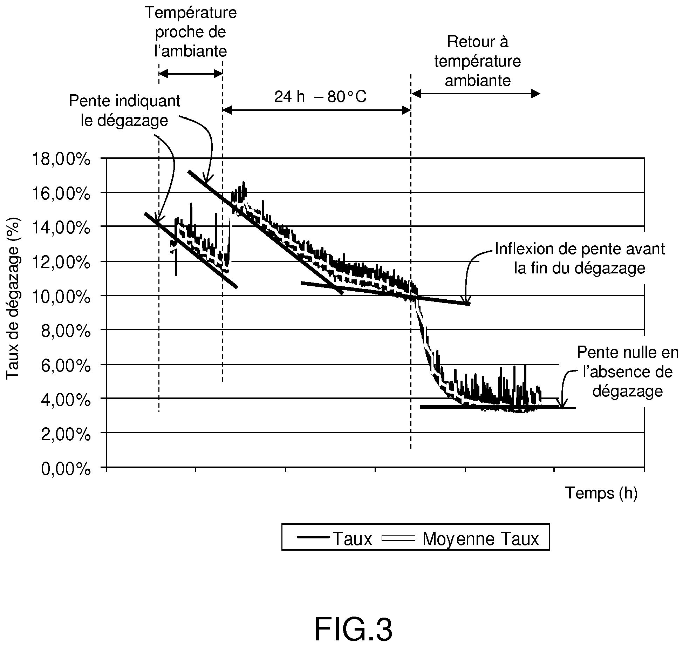

La figure 1 représente un dispositif de dégazage pour la mise en oeuvre du procédé selon l'invention, la figure 2 représente une courbe d'évolution du taux de dégazage obtenue par le procédé selon l'invention, la figure 3 illustre le principe de détermination de la pente d'évolution du taux de dégazage par le procédé selon l'invention.

Par souci de clarté, les mêmes éléments porteront les mêmes repères dans les différentes figures.

La figure 1 représente un dispositif de dégazage pour la mise en oeuvre du procédé selon l'invention. Le dispositif comprend une enceinte sous vide 10 dans laquelle peut être placé un composant à dégazer. Le dispositif comprend également des moyens 11 aptes à piloter en pression et en température l'enceinte sous vide. L'enceinte est mise sous vide et pendant une durée variable selon la quantité d'eau retenue par les matériaux la pression reste proche de $10^{-3}$ hPa. Lorsque la pression partielle de vapeur tombe au-dssous d'un certain seuil la pression décroît et à la fin de l'essai, c'est-à-dire, à la fin du temps imparti, la pression avoisine généralement les $10^{-6}$ hPa comme mentionné précédemment. L'enceinte peut également être pilotée en température pour accélérer le phénomène de désorption.

Le dispositif comprend aussi un spectromètre de masse 12 relié à l'enceinte sous vide 10 par l'intermédiaire d'une canalisation 13. Un spectromètre de masse 12 courant est mis en oeuvre, il comprend typiquement une source où a lieu l'ionisation d'une fraction des molécules présentes, un système dispersif capable de séparer les différentes masses atomiques issues de la source, et un analyseur capable de mesurer l'abondance relative des masses atomiques. L'analyseur détermine ainsi une pression partielle $P_i$ pour chacune des masses atomiques sur une échelle allant le plus souvent de 0 à 100, ou 200, ou encore 300 selon la configuration du spectromètre.

Le dispositif comprend également un module de pilotage 14 permettant de mettre en oeuvre le procédé de suivi du taux de dégazage. Selon l'invention, le procédé de suivi du taux de dégazage décrit dans la suite comprend des étapes de calcul qui peuvent être mises en oeuvre au moyen de divers supports. Elles peuvent par exemple être implémentées dans le logiciel de pilotage du spectromètre de masse, ou encore dans un module électronique 14 séparé, relié au spectromètre de masse 12 comme représenté sur la figure 1. Comme cela est décrit dans la suite, le procédé détermine un taux de dégazage et un critère d'arrêt du dégazage, ces informations peuvent ensuite être affichées à destination d'un opérateur, par exemple au moyen d'un écran d'ordinateur 15. A cet effet, le module 14 peut être relié à un écran d'ordinateur 15 par une liaison 16. Il est également envisager d'utiliser ces informations pour le pilotage de l'enceinte sous vide, typiquement pour piloter un retour à température ambiante lorsque le procédé détermine que le critère d'arrêt est satisfait. Comme représenté sur la figure 1, le module 14 peut être relié aux moyens de pilotage 11 de l'enceinte sous vide 10 par l'intermédiaire d'une liaison 17.

La figure 2 représente une courbe d'évolution temporelle du taux de dégazage obtenue par le procédé selon l'invention. Lorsqu'un composant à dégazer est placé dans l'enceinte sous vide 10, celui-ci peut libérer diverses espèces chimiques comme précédemment décrit. Le spectromètre de masse 12 relié à l'enceinte sous vide permet de déterminer les pressions partielles $P_i$ des masses atomiques résultantes de l'ionisation de ces espèces. Cette mesure peut être réalisée périodiquement selon un pas de temps prédéterminé, éventuellement ajustable par un opérateur. Le procédé selon l'invention comprend tout d'abord une étape consistant à sélectionner un ensemble M de masses atomiques de référence. Cet ensemble de masses atomiques de référence est un sous-ensemble des masses atomiques mesurables par le spectromètre de masse, typiquement comprises entre 1 et 100 lorsque la masse atomique maximale du spectromètre est de 100. On sélectionne cet ensemble de masses atomiques de référence en fonction des espèces chimiques libérées par le composant.

Par exemple pour un composant dont on sait qu'il est susceptible de libérer de l'eau, des produits siliconés et du benzène, l'ensemble M de masses atomiques de référence retenu est :

$$M = \{16,18,30,32,44,58,62,72,78,86,92\} \;;$$

dans le but de suivre le dégazage des espèces silane ($SiH_4$ de masse atomique 32), di silane ($Si_2H_6$ de masse atomique 62), tri silane ($Si_3H_8$ de masse atomique 92) et benzène (de masse atomique 78). Nous avons en effet remarqué qu'en présence d'une désorption de masses molléculaires élevées, des composés chimiques de masses moléculaires plus faibles typiquement comprises entre 1 et 100, sont également libérées. Ainsi dans cette exemple, le suivi des composés à base de silicium a pour but de mettre également en évidence la désorption de composés siliconés de masses moléculaires plus élevées.

Le procédé comprend une étape consistant à déterminer périodiquement, généralement selon le même pas de temps que celui de la mesure du spectromètre de masse, un taux de dégazage $\eta$, au moins en fonction d'une somme pondérée des pressions partielles $P_i$ mesurées pour l'ensemble M des masses atomiques de référence.

Ce taux de dégazage $\eta$ est déterminé par calcul au moyen d'une relation du type :

$$\eta \;=\; \frac{\displaystyle\sum_{i \in M} \alpha_i \, P_i}{\displaystyle\sum^{N} \alpha_i \, P_i}$$

dans laquelle M désigne l'ensemble des masses atomiques de référence, les variables $P_i$ désignent les pressions partielles des masses atomiques de référence mesurées par le spectromètre de masse, les coefficients $\alpha_i$ désignent des coefficients de pondération associés à chaque pression partielle $P_i$, et N désigne la plus grande masse atomique mesurée par le spectromètre de masse (typiquement $100 \leq N \leq 300$ selon la plage du spectromètre utilisé). On peut par exemple déterminer un taux de dégazage par la seule somme des pressions partielles $P_i$, en retenant donc des coefficients de pondération $\alpha_i$ égaux à 1.

Toutefois il a été démontré que la formule ci-dessus permet un suivi du taux de dégazage particulièrement efficace, en particulier lorsque N=100. En effet, les composés gazeux comme l'azote ou l'oxygène contribuent le plus largement à la pression globale au niveau du spectromètre. La somme qui figure au dénominateur dans la formule ci-dessus est assez proche de cette pression globale au niveau du spectromètre mais elle s'en différentie légèrement du fait de la limitation du nombre N de masses molaires identifiées. Le calcul du taux de dégazage η par le rapport entre la somme des pressions partielles, éventuellement pondérées, des espèces d'intérêts (eau, produits siliconés, benzène, etc...) et la somme des pressions partielles, éventuellement pondérées, de l'ensemble des masses atomiques mesurées permet un suivi qualitatif efficace au cours du dégazage.

Sur la figure 2 est représentée l'évolution temporelle de ce taux de dégazage au cours d'un essai de dégazage comprenant une première phase réalisée à une température proche de la température ambiante, suivie d'une seconde phase réalisée à une température de 80°C pendant une durée de 24 heures, suivie d'une troisième phase de retour à la température ambiante. On constate sur cette figure, d'abord sur la première phase, l'évolution du critère de dégazage sous l'effet de la mise en vide et sans la mise en oeuvre des réchauffeurs. Lors de la seconde phase qui constitue le véritable essai de dégazage en vide thermique, on relève parfaitement la stimulation du dégazage par la température par l'élévation du graphe, c'est-à-dire, l'élévation du taux de désorption des matériaux. Ce taux de dégazage évolue en diminuant progressivement au cours de l'essai. Le procédé selon l'invention ne cherche donc pas à déterminer quantitativement une masse désorbée, mais contrairement aux techniques connues, il permet avantageusement de déterminer l'évolution du dégazage au cours de l'essai. Il est possible de visualiser une tendance d'évolution du taux de dégazage en temps réel. Cette tendance d'évolution est une caractéristique essentielle car elle va permettre de mieux définir la durée de l'opération de dégazage, en permettant par exemple de déterminer un critère d'arrêt de cette opération comme décrit au moyen de la figure suivante.

La figure 3 illustre le principe de détermination de la pente d'évolution du taux de dégazage par le procédé selon l'invention. A la suite de l'étape de calcul du taux de dégazage η tel que décrit précédemment, le procédé peut comprendre une étape de filtrage. Diverses techniques de filtrage des taux de dégazage calculées à chaque pas de temps peuvent être envisagées, on pense notamment à une moyenne glissante, comme représentée par le trait noir en gras sur les figures 2 et 3 ou un filtre médian ou un filtre de Kalman. Le procédé comprend ensuite une étape consistant à calculer et afficher périodiquement, généralement selon le même pas de temps que celui du calcul du taux de dégazage, d'une pente d'évolution du taux de dégazage η. Typiquement, cette pente est définie comme la différence entre deux taux de dégazage déterminés successivement, rapportée au pas de temps entre deux calculs. Cette pente d'évolution est schématisée au moyen des droites noires en gras sur la figure 3. Dans la première phase de l'essai, réalisée à une température proche de la température ambiante, on constate une pente sensiblement constante du taux de dégazage. Dans la seconde phase de l'essai, réalisée à une température de 80°C pendant une durée de 24 heures, on constate que la pente évolue lentement et tend vers une pente nulle. Dans la troisième phase de l'essai, la pente est sensiblement nulle dès lors que la température est ramenée à la température ambiante.

Le taux de dégazage ne tend pas exactement vers zéro car, outre quelques traces de produits volatils qui continuent d'être libérés par les matériaux sous test dans des proportions négligeables, il n'existe plus de dynamique de pompage dans l'enceinte à vide et la pression reste constante au même titre que les densités des divers produits qui en composent l'atmosphère : le groupe de pompage ayant alors atteint la limite de ses performances, nous pouvons considérer qu'il n'y a quasiment plus d'échange particulaire entre l'intérieur et l'extérieur du caisson aux fuites près.

Le procédé selon l'invention permet le suivi de l'opération de dégazage en temps réel, au moyen du calcul et de l'affichage à destination d'un opérateur, de la pente d'évolution du taux de dégazage calculé. Lorsque l'opérateur constate que la pente n'évolue plus ou qu'elle passe au-dessous d'un critère donné, il peut alors décider d'interrompre l'opération de dégazage. Le suivi de la pente lors du retour à la température ambiante permet un second suivi, a posteriori, de l'efficacité de l'opération de dégazage.

Pour automatiser et fiabiliser l'arrêt de l'opération de dégazage, il est également envisagé par le procédé selon l'invention de déterminer un critère d'arrêt, au moins en fonction de la pente d'évolution du taux de dégazage η.

Par exemple, le critère d'arrêt peut être déterminé par comparaison de la pente d'évolution du taux de dégazage η avec une valeur prédéterminée. Le critère d'arrêt peut aussi être déterminé par comparaison, avec une valeur prédéterminée, du rapport entre la pente d'évolution du taux de dégazage η déterminée périodiquement et une pente d'évolution du taux de dégazage $\eta_o$ déterminée initialement. Alternativement, l'arrêt de l'opération de dégazage peut encore être déterminé en fonction de ces deux critères.

Dans un premier mode de réalisation, le critère d'arrêt peut être affiché sur un écran à destination de l'opérateur dans le but de l'avertir de la fin de l'opération de dégazage. Autrement dit, le procédé peut avantageusement comprendre une étape d'alerte, à destination d'un opérateur de l'enceinte sous vide, en fonction du critère d'arrêt.

Dans un autre mode de réalisation, le critère d'arrêt peut aussi être mis en oeuvre pour piloter l'enceinte sous vide 10. Typiquement, lorsque le critère d'arrêt indique la fin de l'opération de dégazage, par exemple lorsque la pente d'évolution du taux de dégazage est inférieure à une valeur prédéterminée, l'enceinte sous vide est ramenée à température ambiante. Autrement dit, le procédé selon l'invention peut comprendre une étape consistant à modifier des conditions de température et de pression régnant dans l'enceinte sous vide en fonction du critère d'arrêt.

Il est bien entendu que les deux modes de réalisation ci-dessus ne sont que des exemples non limitatifs d'automatisation de l'opération de dégazage, rendu possible par le procédé de suivi du taux de dégazage selon l'invention. Plus généralement, l'invention porte sur le procédé de calcul du taux de dégazage déterminé au moyen des pressions partielles d'un ensemble de masses atomiques de référence sélectionné en fonction d'un composant à dégazer ; et sur l'utilisation de ce taux de dégazage pour le pilotage de l'opération de dégazage, en particulier par le pilotage des conditions régnant dans l'enceinte sous vide contenant le composant à dégazer.

Il est aussi envisagé par la présente invention de définir une liste d'ensembles de masses atomiques de référence ; chaque ensemble de masses atomiques de référence étant particulièrement adapté au suivi du dégazage d'un certain type de composant. Comme on l'a indiqué précédemment, on a démontré qu'un ensemble $M_1$ constitué des masses atomiques 16, 18, 30, 32, 44, 58, 62, 72, 78, 86 et 92 était particulièrement adapté pour le suivi du dégazage de composants susceptibles de libérer des produits siliconés. On envisage selon le même principe de définir d'autres ensembles $M_2$, $M_3$, etc... respectivement adaptés pour le suivi du dégazage de composants susceptibles de libérer d'autres espèces chimiques. Ainsi, le procédé selon l'invention peut comprendre une étape préalable de sélection dans une liste prédéterminée (comprenant alors les ensembles $M_1$, $M_2$, $M_3$, etc...), de l'ensemble de masses atomiques de référence mis en oeuvre pour le calcul du taux de dégazage.

Selon le même principe, il est également envisagé d'associer à chaque ensemble de masses atomiques de référence, plusieurs jeux de coefficients de pondération $\alpha_i$ associés aux pressions partielles Pi de l'ensemble M de masses atomiques de référence considéré. Ainsi, après avoir sélectionné un ensemble de masses atomiques de référence, parmi la liste comprenant les ensembles $M_1$, $M_2$, $M_3$, etc..., l'opérateur peut encore sélectionner un jeu de coefficient de pondération parmi une liste prédéterminé ; l'intérêt d'une telle option étant notamment de permettre de tester et visualiser plusieurs formules de calcul du taux de dégazage pour sélectionner, en temps réel ou a posteriori, la formule permettant le suivi le plus précis du taux de dégazage.

L'invention porte également sur un spectromètre de masse comprenant un module de pilotage 14 configurée pour la mise en oeuvre du procédé ayant les caractéristiques précédemment décrites.

L'invention porte enfin sur un dispositif de dégazage comprenant une enceinte sous vide 10 destinée au dégazage d'un composant, et un spectromètre de masse 12 configuré pour mettre en oeuvre le procédé précédemment décrit.

## Revendications

1. Procédé de suivi d'une opération de dégazage d'un composant placé dans une enceinte sous vide (10), qui comprend des étapes consistant à :

    - mesurer périodiquement des pressions partielles $P_i$ d'un ensemble M de masses atomiques de référence, au moyen d'un spectromètre de masse (12) relié à l'enceinte sous vide (10),
    - déterminer périodiquement un taux de dégazage η, au moins en fonction des pressions partielles $P_i$ mesurées pour l'ensemble M de masses atomiques de référence, par calcul au moyen d'une relation du type :

$$\eta = \frac{\sum_{i \in M} \alpha_i \, P_i}{\sum^{N} \alpha_i \, P_i}$$

    dans laquelle M désigne l'ensemble des masses atomiques de référence, $P_i$ désignent les pressions partielles des masses atomiques mesurées par le spectromètre de masse (12), les coefficients $\alpha_i$ désignent des coefficients de pondération prédéterminés associés à chaque pression partielle $P_i$, et N désigne une masse atomique maximale dont la pression partielle Pi peut être mesurée par le spectromètre de masse (12),
    - calculer et afficher périodiquement une pente d'évolution du taux de dégazage η.

2. Procédé selon la revendication 1, dans lequel l'ensemble M de masses atomiques de référence comprend au moins les masses atomiques suivantes : 16, 18, 30, 32 et 44.

3. Procédé selon l'une des revendications précédentes, comprenant une étape préalable de sélection dans une liste prédéterminée, de l'ensemble M de masses atomiques de référence mis en oeuvre pour le calcul du taux de dégazage.

4. Procédé selon l'une des revendications précédentes, comprenant une étape de sélection dans une liste prédéterminée, d'un ensemble de coefficients de pondération $\alpha_i$ associés aux pressions partielles $P_i$ de l'ensemble M de masses atomiques de référence considéré.

5. Procédé selon l'une des revendications précédentes, dans lequel les coefficients de pondération $\alpha_i$ mis en oeuvre dans le calcul du taux de dégazage sont tous égaux à 1.

**6.** Procédé selon l'une des revendications précédentes, comprenant une étape consistant à déterminer périodiquement un critère d'arrêt de l'opération de dégazage, au moins en fonction de la pente d'évolution du taux de dégazage η.

**7.** Procédé selon la revendication 6, dans lequel le critère d'arrêt est déterminé au moins par comparaison de la pente d'évolution du taux de dégazage η avec une valeur prédéterminée.

**8.** Procédé selon la revendication 6, dans lequel le critère d'arrêt est déterminé au moins par comparaison, avec une valeur prédéterminée, du rapport entre la pente d'évolution du taux de dégazage η déterminée périodiquement et une pente d'évolution du taux de dégazage $\eta_o$ déterminée initialement.

**9.** Procédé selon la revendication 6, dans lequel le critère d'arrêt est déterminé en fonction de la pente d'évolution du taux de dégazage η et du rapport entre la pente d'évolution du taux de dégazage η déterminée périodiquement et une pente d'évolution du taux de dégazage $\eta_o$ déterminée initialement.

**10.** Procédé selon l'une des revendications précédentes, comprenant une étape consistant à modifier des conditions de température et de pression régnant dans l'enceinte sous vide (10) en fonction du taux de dégazage η ou de la pente d'évolution du taux de dégazage.

**11.** Procédé selon l'une des revendications précédentes, comprenant une étape d'alerte d'un opérateur de l'enceinte sous vide (10) en fonction du taux de dégazage η ou de la pente d'évolution du taux de dégazage.

**12.** Spectromètre de masse comprenant un module de pilotage (14) configuré pour la mise en oeuvre du procédé selon l'une des revendications 1 à 11.

**13.** Dispositif de dégazage comprenant une enceinte sous vide (10) destinée au dégazage d'un composant, et un spectromètre de masse (12, 14) selon la revendication 12.

**Patentansprüche**

**1.** Verfahren zum Verfolgen eines Vorgangs des Entgasens einer in einer Vakuumkammer (10) platzierten Komponente, das die folgenden Schritte beinhaltet:

- periodisches Messen von Partialdrücken $P_i$ eines Satzes M von Referenzatommassen mittels eines mit der Vakuumkammer (10) verbundenen Massenspektrometers (12);
- periodisches Bestimmen einer Entgasungsrate η wenigstens in Abhängigkeit von den für den Satz M von Referenzatommassen gemessenen Partialdrücken $P_i$ durch Berechnen anhand einer Relation des Typs:

$$\eta = \frac{\sum\limits_{i \in M} \alpha_i\, P_i}{\sum\limits^{N} \alpha_i\, P_i},$$

wobei M den Satz von Referenzatommassen bedeutet, $P_i$ die Partialdrücke der mit dem Massenspektromer (12) gemessenen Atommassen bedeutet, die Koeffizienten $\alpha_i$ vorbestimmte, mit jedem Partialdruck $P_i$ assoziierte Gewichtungskoeffizienten bedeuten und N eine maximale Atommasse bedeutet, deren Partialdruck $P_i$ mit dem Massenspektrometer (12) gemessen werden kann;
- periodisches Berechnen und Anzeigen eines Evolutionsgefälles der Entgasungsrate η.

**2.** Verfahren nach Anspruch 1, wobei der Satz M von Referenzatommassen wenigstens die folgenden Atommassen umfasst: 16, 18, 30, 32 und 44.

**3.** Verfahren nach einem der vorherigen Ansprüche, das einen Vorabschritt des Auswählens, aus einer vorbestimmten Liste, des Satzes M von Referenzatommassen beinhaltet, die zum Berechnen der Entgasungsrate angewandt werden.

**4.** Verfahren nach einem der vorherigen Ansprüche, das einen Schritt des Auswählens, aus einer vorbestimmten Liste, eines Satzes von Gewichtungskoeffizienten $\alpha_i$ beinhaltet, die mit den Partialdrücken $P_i$ des berücksichtigten Satzes M von Referenzatommassen assoziiert sind.

**5.** Verfahren nach einem der vorherigen Ansprüche, wobei die bei der Berechnung der Entgasungsrate angewandten Gewichtungskoeffizienten $\alpha_i$ alle gleich 1 sind.

**6.** Verfahren nach einem der vorherigen Ansprüche, das einen Schritt des periodischen Bestimmens eines Kriteriums zum Stoppen des Entgasungsvorgangs wenigstens in Abhängigkeit von dem Evolutionsgefälle der Entgasungsrate η beinhaltet.

**7.** Verfahren nach Anspruch 6, wobei das Stoppkriterium wenigstens durch Vergleichen des Evolutionsgefälles der Entgasungsrate η mit einem vorbestimmten Wert bestimmt wird.

**8.** Verfahren nach Anspruch 6, wobei das Stoppkriterium wenigstens durch Vergleichen des Verhältnisses zwischen dem periodisch bestimmten Evolutionsgefälle der Entgasungsrate $\eta$ und einem anfangs bestimmten Evolutionsgefälle der Entgasungsrate $\eta_o$ mit einem vorbestimmten Wert bestimmt wird.

**9.** Verfahren nach Anspruch 6, wobei das Stoppkriterium in Abhängigkeit vom Evolutionsgefälle der Entgasungsrate $\eta$ und dem Verhältnis zwischen dem periodisch bestimmten Evolutionsgefälle der Entgasungsrate $\eta$ und einem anfänglich bestimmten Evolutionsgefälle der Entgasungsrate $\eta_o$ bestimmt wird.

**10.** Verfahren nach einem der vorherigen Ansprüche, das einen Schritt des Modifizierens der in der Vakuumkammer (10) vorherrschenden Temperatur- und Druckbedingungen in Abhängigkeit von der Entgasungsrate $\eta$ oder vom Evolutionsgefälle der Entgasungsrate beinhaltet.

**11.** Verfahren nach einem der vorherigen Ansprüche, das einen Schritt des Benachrichtigens eines Bedieners der Vakuumkammer (10) in Abhängigkeit von der Entgasungsrate $\eta$ oder vom Evolutionsgefälle der Entgasungsrate beinhaltet.

**12.** Massenspektrometer, das ein Steuermodul (14) umfasst, das zum Ausführen des Verfahrens nach einem der Ansprüche 1 bis 11 konfiguriert ist.

**13.** Entgasungsvorrichtung, die eine Vakuumkammer (10) zum Entgasen einer Komponente und ein Massenspektrometer (12, 14) nach Anspruch 12 umfasst.

**Claims**

**1.** A method for tracking an operation for degassing a component placed in a vacuum chamber (10), which method comprises the following steps:

- periodically measuring partial pressures $P_i$ of a set M of reference atomic masses using a mass spectrometer (12) connected to the vacuum chamber (10);
- periodically determining a degassing rate $\eta$, at least as a function of the partial pressures $P_i$ measured for the set M of reference atomic masses, by computation using a relation of the following type:

$$\eta = \frac{\sum\limits_{i \in M} \alpha_i\, P_i}{\sum\limits^{N} \alpha_i\, P_i},$$

where M denotes the set of reference atomic masses, $P_i$ denotes the partial pressures of the atomic masses measured by the mass spectrometer (12), the coefficients $\alpha_i$ denote predetermined weighting coefficients associated with each partial pressure $P_i$ and N denotes a maximum atomic mass, the partial pressure $P_i$ of which can be measured by the mass spectrometer (12);
- periodically computing and displaying an evolutionary gradient of the degassing rate $\eta$.

**2.** The method according to claim 1, wherein the set M of reference atomic masses comprises at least the following atomic masses: 16, 18, 30, 32 and 44.

**3.** The method according to one of the preceding claims, comprising a prior step of selecting, from a predetermined list, the set M of reference atomic masses implemented for computing the degassing rate.

**4.** The method according to one of the preceding claims, comprising a step of selecting, from a predetermined list, a set of weighting coefficients $\alpha_i$ associated with the partial pressures $P_i$ of the considered set M of reference atomic masses.

**5.** The method according to one of the preceding claims, wherein the weighting coefficient $\alpha_i$ implemented in the computation of the degassing rate are all equal to 1.

**6.** The method according to one of the preceding claims, comprising a step that involves periodically determining a criterion for stopping the degassing operation, at least as a function of the evolutionary gradient of the degassing rate $\eta$.

**7.** The method according to claim 6, wherein the stop criterion is determined at least by comparing the evolutionary gradient of the degassing rate $\eta$ to a predetermined value.

**8.** The method according to claim 6, wherein the stop criterion is determined at least by comparing, with a predetermined value, the ratio between the periodically determined evolutionary gradient of the degassing rate $\eta$ and an initially determined evolutionary gradient of the degassing rate $\eta_o$.

**9.** The method according to claim 6, wherein the stop criterion is determined as a function of the evolutionary gradient of the degassing rate $\eta$ and of the ratio between the periodically determined evolutionary gradient of the degassing rate $\eta$ and an initially determined evolutionary gradient of the degassing rate $\eta_o$.

**10.** The method according to one of the preceding claims, comprising a step that consists in modifying temperature and pressure conditions prevailing in the vacuum chamber (10) as a function of the degassing rate η or of the evolutionary gradient of the degassing rate.

**11.** The method according to one of the preceding claims, comprising a step of notifying an operator of the vacuum chamber (10) as a function of the degassing rate η or of the evolutionary gradient of the degassing rate.

**12.** A mass spectrometer comprising a control module (14) configured to implement the method according to one of claims 1 to 11.

**13.** A degassing device comprising a vacuum chamber (10) intended for degassing a component, and a mass spectrometer (12, 14) according to claim 12.

FIG.1

FIG.2

FIG.3

**EP 2 843 390 B1**

## RÉFÉRENCES CITÉES DANS LA DESCRIPTION

**Documents brevets cités dans la description**

- WO 2009012919 A

- US 8268241 B